(19) Europäisches Patentamt
European Patent Office
Office européen des brevets

(11) **EP 2 780 649 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **11782624.8**

(22) Anmeldetag: **16.11.2011**

(51) Int Cl.:
**F25B 49/02** (2006.01)

(86) Internationale Anmeldenummer:
**PCT/EP2011/070289**

(87) Internationale Veröffentlichungsnummer:
**WO 2013/071967 (23.05.2013 Gazette 2013/21)**

(54) **VERFAHREN ZUR MINIMIERUNG EINES ENERGIEVERBRAUCHS EINER WÄRMEUMWÄLZMASCHINE, SOWIE WÄRMEUMWÄLZMASCHINE**

METHOD FOR MINIMISING THE ENERGY CONSUMPTION OF A HEAT CIRCULATING MACHINE, AND HEAT CIRCULATING MACHINE

PROCÉDÉ DE MINIMISATION DE LA CONSOMMATION D'ÉNERGIE D'UNE MACHINE À RECIRCULATION DE CHALEUR ET MACHINE À RECIRCULATION DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.09.2014 Patentblatt 2014/39**

(73) Patentinhaber: **A-Heat Allied Heat Exchange Technology AG**
**1120 Wien (AT)**

(72) Erfinder: **ROTH, Peter**
**81371 München (DE)**

(74) Vertreter: **Intellectual Property Services GmbH**
**Langfeldstrasse 88**
**8500 Frauenfeld (CH)**

(56) Entgegenhaltungen:
**EP-A1- 2 351 973      WO-A1-2011/003444**
**JP-A- 7 110 165**

- **Kyle A Manske: "Performance Optimization of Industrial Refrigeration Systems Master of Science", , 1 January 1999 (1999-01-01), XP55628515, Retrieved from the Internet: URL:https://www.seventhwave.org/sites/defa ult/files/196-1.pdf**
- **Amr O. Elsayed ET AL: "Effect of Condenser Air Flow on the Performance of Split Air Conditioner", PROCEEDINGS OF THE 48TH SCANDINAVIAN CONFERENCE ON SIMULATION AND MODELING (SIMS 2007), vol. 57, 3 November 2011 (2011-11-03), pages 2134-2141, XP55628666, Sweden (Goteborg) ISSN: 1650-3686, DOI: 10.3384/ecp110572134 ISBN: 978-91-7685-817-2**

## Beschreibung

Verfahren zur Minimierung eines Energieverbrauchs einer Wärmeumwälzmaschine, sowie Wärmeumwälzmaschine

Die Erfindung betrifft ein Verfahren zur Minimierung eines Energieverbrauchs einer Wärmeumwälzmaschine, sowie eine Wärmeumwälzmaschine zur Durchführung des Verfahrens gemäss dem Oberbegriff der unabhängigen Ansprüche 1 und 8.

Die Verwendung von Wärmetauschsystemen ist in einer kaum zu überblickenden Zahl von Anwendungen aus dem Stand der Technik bekannt. Das Dokument: "Performance Optimization of Industrial Refrigeration Systems Master of Science" von Kyle A. Manske, 1999-01-01, XP55628515 (im Internet auffindbar unter https://www.seventhwave.org/sites/default/files/196-1.pdf) offenbart ein Verfahren zur Minimierung eines Energieverbrauchs einer Wärmeumwälzmaschine.

Wärmetauscher werden in Kühlanlagen, wie z.B. in gewöhnlichen Haushaltskühlschränken verwendet, in Klimaanlagen für Gebäude oder in Fahrzeugen aller Art, vor allem in Kraftfahrzeugen, Flugzeugen und Schiffen, als Wasser- oder Ölkühler in Verbrennungsmotoren, als Kondensatoren oder Verdampfer in Kühlmittelkreisen, wie zum Beispiel in Wärmepumpen und in weiteren unzähligen verschiedenen Anwendungen, die dem Fachmann alle wohlbekannt sind.

Es gibt dabei verschiedene Möglichkeiten die Wärmetauscher aus ganz unterschiedlichen Anwendungen sinnvoll zu klassifizieren. Ein Versuch besteht darin, eine Unterscheidung nach dem Aufbau bzw. der Herstellung der verschiedenen Typen von Wärmetauschern vorzunehmen.

So kann einerseits eine Einteilung nach sogenannten "Lamellierten Wärmetauschern", die auch als "Röhrenwärmetauscher" bezeichnet werden können, und andererseits nach "Minnichannel-", "Microchannelwärmetauscher" oder "Mikrokanalwärmetauschern" vorgenommen werden.

Die seit sehr langer Zeit wohlbekannten lamellierten Röhrenwärmetauscher dienen, wie alle Typen von Wärmetauschern, zur Übertragung von Wärme zwischen zwei Medien, z.B., aber nicht nur, zur Übertragung von einem Kühlmedium auf Luft oder umgekehrt, wie es zum Beispiel von einem klassischen Haushaltskühlschrank oder einer Klimaanlage bekannt ist, bei dem über den Wärmetauscher zur Erzeugung einer Kühlleistung im Inneren des Kühlschranks oder im Inneren eines Gebäudes Wärme an die Umgebungsluft ausserhalb abgegeben wird.

Das Umgebungsmedium ausserhalb des Wärmetauschers, also z.B. Wasser, Öl oder häufig einfach die Umgebungsluft, die zum Beispiel die Wärme aufnimmt oder von dem Wärme auf den Wärmetauscher übertragen wird, wird dabei entweder entsprechend abgekühlt oder erwärmt. Das zweite Medium kann z.B. ein flüssiger Kälte- bzw. Wärmeträger sein oder ein verdampfendes bzw. kondensierendes Wärmemedium. Dabei ist im Rahmen dieser Anmeldung unter dem Begriff "Wärmemedium" jedes Fluid zu verstehen, das vorteilhaft in einem Wärmetauscher verwendet werden kann. Der Begriff "Wärmemedium" umfasst somit sowohl die in der Technik bekannten klassischen Kältemittel als auch jedes andere geeignete Wärmemittel bzw. Kühlmittel, wie sie beispielweise, aber nicht nur in Klimaanlagen verwendet werden.

Daher sind bereits vor einigen Jahren eine neue Klasse von Wärmetauschern, sogenannte Minichannel- oder Mircochannelwärmetauscher oder auch Mikrokanalwärmetauscher entwickelt worden, die nach einem völlig anderen Verfahren hergestellt werden und fast dem Idealbild eines lamellierten Röhrenwärmeaustauschers entsprechen: viele kleine Rohre mit kleinen Abständen.

Anstatt kleiner Rohre werden jedoch beim Minichannelwärmetauscher z.B. Aluminiumstrangpressprofile verwendet, die sehr viele kleine Kanäle mit einem Durchmesser von z.B. etwa 1 mm haben. In der Praxis kann dabei ein Wärmetauscher, je nach geforderter Wärmeübertragungsleistung, bereits mit einem einzigen Strangpressprofil als zentrales Wärmeaustauschelement auskommen. Um höhere Wärmeübertragungsleistungen zu erzielen, können selbstverständlich in einem einzigen Wärmetauschsystem auch mehrere Strangpressprofile gleichzeitig vorgesehen werden, die in geeigneten Kombinationen zum Beispiel über zu und Ableitungen miteinander verbunden, z.B. miteinander verlötet werden.

Durch die engen Abstände und die kleinen Kanaldurchmesser bei den Mikrokanalwärmetauschern entsteht ein Wärmetauscher mit einem sehr hohen Lamellenwirkungsgrad und einem sehr geringen Füllvolumen (Kanalinnenseite). Die weiteren Vorteile dieser Technik sind die Vermeidung von Materialpaarungen (Korrosion), das geringe Gewicht (kein Kupfer), die hohe Druckstabilität (ca. 100 bar) sowie die kompakte Bauform (typische Tiefe eines Wärmeaustauschers z.B. 20mm).

Wenn im Rahmen der vorliegenden Anmeldung die Rede von Wärmetauschern, Verflüssigern, Verdampfer oder dergleichen die Rede ist, so können damit sowohl die klassischen lamellierten Wärmetauscher als auch Mikrokanalwärmetauscher verstanden werden, die der Fachmann je nach Anwendung vorteilhaft, eventuell auch in Kombination einzusetzen weiss.

Betrachtet man zum Beispiel Klimaanlagen, so ist es allgemein bekannt, dass die Wahl der Verflüssigungstemperatur in Kältekreisläufen einen starken Einfluss auf die Leistungszahl, (im Folgenden einfach COP, coefficient of performance, genannt) des Kreislaufes hat. Je niedriger die Verflüssigungstemperatur, desto höher ist der Wirkungsgrad der Anlage und desto weniger Energie muss zur Bereitstellung einer gegebenen Kälte-/Klimaleistung aufgebracht werden. Dabei betrachtet man gewöhnlich nur die Leistungsaufnahme des Verdichters als einzig aufzuwendende Leistung. Allein schon aus Umweltschutzgründen, aber natürlich auch aus Kostengründen kommt dabei einem effizienten Einsatz der elektrischen Betriebsenergie eine immer grössere Bedeutung zu, auch mit Blick darauf, dass der Einsatz von Klimageräten aller Art weltweit im stärker zunimmt. Daher besteht ein entsprechendes Bedürfnis immer effizientere Klimageräte zur Verfügung zu stellen bzw. immer effizientere Verfahren zu deren Betrieb zu entwickeln.

Die Aufgabe der Erfindung ist es daher, eine verbesserte Wärmeumwälzmaschine sowie ein energieeffizienteres Verfahren zum betreiben einer Wärmeumwälzmaschine bereitzustellen.

Die diese Aufgaben lösenden Gegenstände der Erfindung sind durch die Merkmale der unabhängigen Ansprüche 1 und 8 gekennzeichnet.

Die abhängigen Ansprüche beziehen sich auf besonders vorteilhafte Ausführungsformen der Erfindung.

Die Erfindung betrifft somit ein Verfahren zur Minimierung eines Energieverbrauchs einer Wärmeumwälzmaschine, gemäß Anspruch 1.

Es ist somit eine wesentliche Erkenntnis der vorliegenden Erfindung, dass man bei der Gesamtleistungsaufnahme der Kälte-/Klimaanlage auch die elektrische Leistung der Verflüssigerventilatoren mit zu berücksichtigen hat, wenn man die Gesamtleistungsaufnahme der Wärmeumwälzmaschine effektiv minimieren will. Sobald nämlich, insbesondere im Fall von Teillastzuständen der Kälteanlage und anderen im Vergleich zum Volllastbetrieb veränderten Betriebsbedingungen, wie zum Beispiel niedrigere Umgebungstemperaturen vorliegen, kann die Leistungsaufnahme der als Verflüssigerventilatoren in der Wärmeumwälzmaschine eingesetzten Strömungsmaschinen in die Größenordnung der Leistungsaufnahme des Verdichters kommen oder diese sogar übertreffen. Es hat sich dabei durch die vorliegende Erfindung gezeigt, dass unter solchen Umständen es energetisch günstiger sein kann, die Drehzahl der Verflüssigerventilatoren zu senken. Dies führt zwar zu einem Anstieg der Verflüssigungstemperatur und dadurch zu einem Anstieg der Leistungsaufnahme des Verdichters, der jedoch mit der Energiereduzierung am Verflüssigerventilator ins Verhältnis gesetzt werden muss, um beurteilen zu können, ob Gesamtenergie eingespart werden kann oder nicht.

In der Kälte- und Klimatechnik werden zur Regelung der Verflüssigungstemperatur bisher fast ausschließlich P- oder PI-Regler eingesetzt, die einen oder zwei feste Sollwerte aufweisen. Dagegen wird durch die vorliegende Erfindung eine neuartige Regelstrategie vorgestellt, die eine deutliche Energieeinsparung im Vergleich zur Standardregelung erzielt.

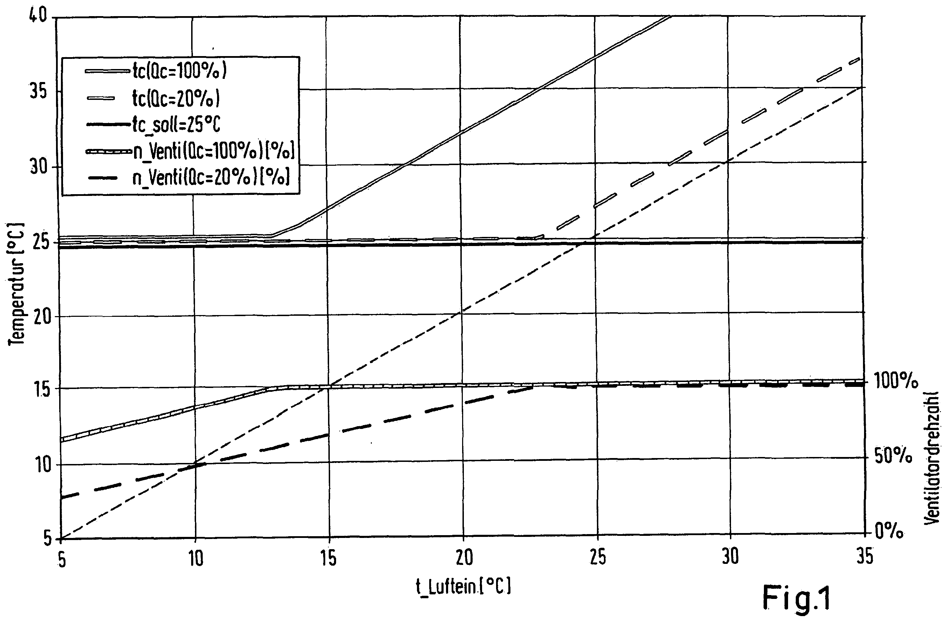

Beim Betrieb von Kälte- und Klimaanlagen wurde von aufmerksamen Anlagenbetreibern immer wieder festgestellt, dass z.B. an warmen Tagen Betriebszustände zu beobachten waren, bei denen die Drehzahl der Verflüssigerventilatoren unerwartet hoch war, obwohl sich die Anlage, zum Beispiel wegen Produktionsunterbrechungen, in einem niedrigen Teillastbereich befand. Dieser Sachverhalt ist aber nur dann als ungewöhnlich aufgefallen, wenn der Lastzustand der Anlage explizit bekannt war, da eine hohe Außentemperatur grundsätzlich auch eine hohe Drehzahl der Verflüssigerventilatoren erwarten lässt. Bei Anlagen mit einem hohen und damit energieaufwändigen Verflüssigungssollwert traten diese Fälle nicht auf, da die Verflüssigerventilatoren schon früh in den Regelbetrieb gingen um den eingestellten Sollwert für die Verflüssigungstemperatur nicht zu unterschreiten. Dieser aus dem Stand der Technik bekannte Zusammenhang lässt sich im Diagramm gemäss Fig. 1 einfach nachvollziehen, die eine bekannte Standardverflüssigungsregelung mit Tc_soll = 25°C bei einer Geräteauslegung mit dt1 = 12 K exemplarisch zeigt.

Im Beispiel der Fig. 1 wurde angenommen, dass ein Verflüssiger mit einer Eintrittstemperaturdifferenz, d.h. mit einer Temperaturdifferenz zwischen Verflüssigungs- und Lufteintrittstemperatur, von 12K ausgelegt wurde. Somit liegt die Verflüssigungstemperatur im Volllastfall immer 12K über der Lufteintrittstemperatur. Dies ist vereinfacht betrachtet erst einmal unabhängig von der absoluten Lufteintrittstemperatur. Beispielsweise wird sich bei einer Lufteintrittstemperatur von 28°C und bei voller Drehzahl der Verflüssigerventilatoren eine Verflüssigungstemperatur von 40°C einstellen. Des Weiteren sei angenommen, dass der Verflüssigungssollwert auf 25°C am Regler eingestellt wurde. Fällt die Lufteintrittstemperatur unter 13°C beginnt der Regler, auch bei Volllast der Anlage, die Drehzahl der Verflüssigerventilatoren zu reduzieren, um den Verflüssigungssollwert nicht zu unterschreiten. Eine Unterschreitung könnte zu einer Verletzung der Auslegungsbedingungen der Expansionsventile führen und Leistungsverluste an den Verdampfern verursachen.

Befindet sich die Anlage im Teillastbereich, zum Beispiel weil am Wochenende nur wenig Kälte zu Produktionszwecken benötigt wird, wird sich unter der Annahme, dass die Ventilatoren unverändert in ihrer Nenndrehzahl betrieben werden, die Eintrittstemperaturdifferenz reduzieren. Die Ursache dafür ist die physikalische Tatsache, dass die Leistung eines Wärmeaustauschers in erster Näherung, bei sonst gleichen Randbedingungen, mit der treibenden Temperaturdifferenz skaliert.

Auch dieser Fall ist in Fig. 1 dargestellt. Der Regler beginnt bei 23 °C Lufteintrittstemperatur die Drehzahl der Ventilatoren zu reduzieren. Liegt die Lufteintrittstemperatur höher, tritt jetzt der unerwünschte Fall auf, dass die Ventilatoren mit voller Drehzahl betrieben werden, obwohl nur eine geringe Kälte- bzw. Klimaleistung benötigt wird. Es hat sich gezeigt, dass das sogar dazu führen kann, dass die Verflüssigerventilatoren mehr Energie als der Kompressor, also der Verdichter verbrauchen, was aus energetischer Sicht sehr unbefriedigend ist. Dieser Sachverhalt kann auch so beschrieben werden, dass ab einer bestimmten Außentemperatur eine Standardverflüssigungsregelung nicht mehr lastabhängig regeln kann oder den Lastzustand einer Kälte-/Klimaanlage nicht mehr erkennt.

Um diese Situation zu entschärfen, gibt es schon seit vielen Jahren bei den Verflüssigungsdruckreglern der Fa. Güntner den optionalen Betriebsmodus "Aussentemperaturgeführte Sollwertschiebung". Dazu muss am Regler, wie bisher auch, der Sollwert, der am sinnvollsten auf die minimal erlaubte Verflüssigungstemperatur eingestellt sein sollte, als auch ein zweiter Wert, die "Schiebung" in Kelvin, eingegeben werden. Zusätzlich benötigt der Regler die aktuelle Lufteintrittstemperatur, die über einen Temperatursensor abgefragt wird. Die diesem Verfahren zu Grunde liegende Vorschrift lautet:

Der zur Regelung der Ventilatordrehzahl zu verwendende Sollwert sei der am Regler eingestellte feste Wert, außer die Summe aus Lufteintrittstemperatur und Schiebung ist größer, als dieser Wert. Dann verwende diese Summe als neuen Sollwert.

$$tc\_soll = \max \begin{cases} t\_LE + Schiebung \\ tc\_min \end{cases}$$

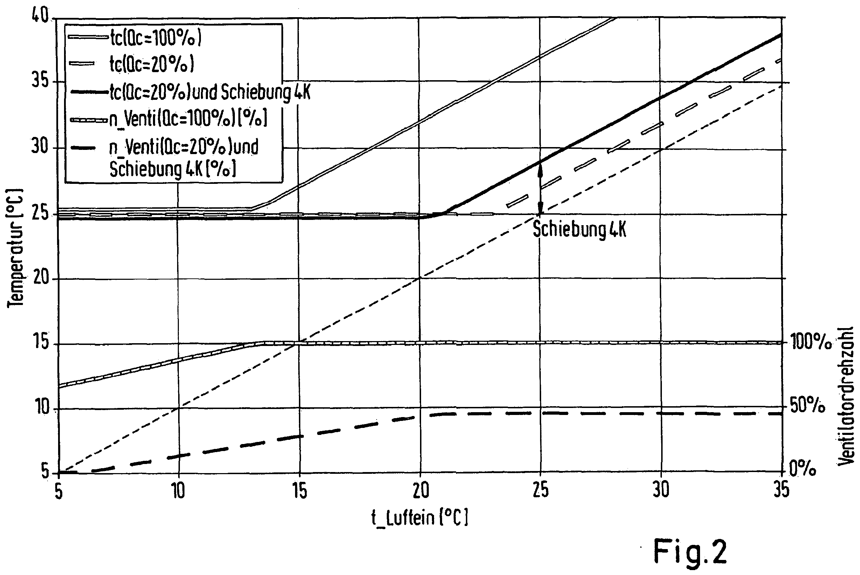

Der aktuelle Verflüssigungssollwert ist nun keine feste Zahl mehr, sondern wird ab einer bestimmten Außentemperatur gleitend, mit einem festen Temperaturabstand - der Schiebung - zur aktuellen Lufteintrittstemperatur nach oben verschoben. Die sich nun einstellenden Betriebsbedingungen sind Fig. 2 beispielhaft dargestellt, die eine aussentemperaturgeführte Sollwertschiebung mit tc_soll = 25°C und einer Schiebung 4K bei einer Geräteauslegung mit dt1 = 12 K zeigt.

Die Auslegungs- und Randbedingungen wurden, wie in Fig. 1 angegeben, beibehalten, das heißt tc_min=25°C und dt1=12K. Die neu hinzukommende Schiebung wurde mit 4K angenommen. Bei den Betriebszuständen mit hoher Kälte-/Klimalast ändert sich an der Drehzahl der Verflüssigerventilatoren nichts. Im Volllastfall wird die Verflüssigungstemperatur weiterhin immer 12K über der Lufteintrittstemperatur liegen und verhält sich somit genauso, wie bei der Standardregelung. Wie bisher auch, wird bei Lufteintrittstemperaturen unter 13°C die Ventilatordrehzahl zurückgeregelt. Wenn sich nun auf Grund geringer Kälte- bzw. Klimalast die Eintrittstemperaturdifferenz am Verflüssiger deutlich reduziert, wird die sich bei voller Drehzahl der Ventilatoren ergebende Verflüssigungstemperatur bei hohen Lufteintrittstemperaturen kleiner sein, als die Summe aus Lufteintrittstemperatur und Schiebung. Da diese Summe beim Regelmodus "Aussentemperaturgeführte Sollwertschiebung" den aktuellen Sollwert darstellt, muss der Regler die Drehzahl der Ventilatoren reduzieren, um den neuen Sollwert nicht zu unterschreiten. Dies ist genau die Reaktion, die erreicht werden sollte. Die Drehzahl und somit die Leistungsaufnahme der Verflüssigerventilatoren wird in Teillast der Anlage reduziert, obwohl die Verflüssigungstemperatur höher als der fest eingestellte Sollwert von 25°C liegt.

Es darf jedoch nicht unbeachtet bleiben, dass der COP der Kälteanlage sich gegenüber der Standardregelung nun verschlechtert hat, da eine Erhöhung der Verflüssigungstemperatur durch die reduzierte Ventilatordrehzahl bewusst in Kauf genommen wurde. Die Gesamtleistungsaufnahme der Kälteanlage, also die Summe aus den elektrischen Leistungsaufnahmen des Verdichters und der Verflüssigerventilatoren kann aber sehr wohl niedriger liegen, als im Fall ohne "Aussentemperaturgeführte Sollwertschiebung", d.h. bei 100% Ventilatordrehzahl.

Dass dies ein relevanter Effekt ist, hängt mit der Tatsache zusammen, dass die Leistungsaufnahme der Ventilatoren mit der dritten Potenz der Drehzahl steigt, der Luftvolumenstrom jedoch nur linear mit der Drehzahl zunimmt. Der Gesamtenergieverbrauch der Kälteanlage wird unter Anderem durch die Höhe der thermischen Teillast am Verflüssiger, durch den COP der Kälteanlage und die Energieeffizenzklasse des Verflüssigers bzw. des Verflüssigerventilators bestimmt. Somit hängt auch ein sinnvoller Wert für die Schiebung von diesen Parametern ab.

Die Höhe der Schiebung kann aus den Anlagendaten berechnet bzw. abgeschätzt, oder aus Erfahrungswerten abgeleitet werden. Grundsätzlich gilt, dass die Schiebung umso größer gewählt werden sollte, je höher der COP der Kälte-/Klimaanlage ist, da bei hohem COP die Verdichterleistung im Vergleich zur Ventilatorleistungsaufnahme immer kleiner wird. Das heißt der Einfluss der Energieaufnahme der Verflüssigerventilatoren nimmt im Vergleich zur Energieaufnahme der gesamten Anlage immer mehr zu. Die Schiebung sollte also bei Klimaanwendung höher sein als bei Tiefkälteanwendungen, bei denen eine Schiebung eventuell ganz entfallen kann, da die Gesamtleistungsaufnahme der Anlage immer vom Verdichter dominiert wird.

Des Weiteren wird eine sinnvolle Schiebung bei Verflüssigern mit niedriger Energieeffizenzklasse immer höher ausfallen als bei Verflüssigern mit hoher Energieeffizenzklasse. Dies ist sofort einleuchtend, da die Energieeffizenzklasse als Verhältnis aus Nennverflüssigerleistung Q_c_nom zur elektrischen Leistungsaufnahme P_el der Ventilatoren definiert ist. Dieser Wert wird z.B. bei Eurovent zertifizierten Verflüssigerherstellern zu jedem Gerät angegeben.

$$GI.\ 1 \qquad R = \frac{\dot{Q}_{c\_nom}}{P_{el}}$$

| Class | Energieverbrauch | R |
|---|---|---|
| A++ | außergewöhnlich niedrig | 240 < R |
| A+ | extrem niedrig | 160 < R < 240 |
| A | sehr niedrig | 110 < R < 160 |
| B | niedrig | 70 < R < 110 |
| C | mittel | 45 < R < 70 |
| D | hoch | 30 < R < 45 |
| E | sehr hoch | 30 < R |

Tab. 1: Energieeffizienzklassen und Energieverbrauch

Ein Verflüssiger der Energieeffizienzklasse E verbraucht im Vergleich zu einem Verflüssiger der Energieeffizienzklasse A mehr als 3-mal soviel elektrische Antriebsenergie zum Erreichen derselben thermischen Verflüssigerleistung. Somit sollten die Ventilatoren einer schlechteren Energieeffizienzklasse natürlich früher in der Drehzahl reduziert werden, als bei Geräten einer höheren Energieeffizienzklasse.

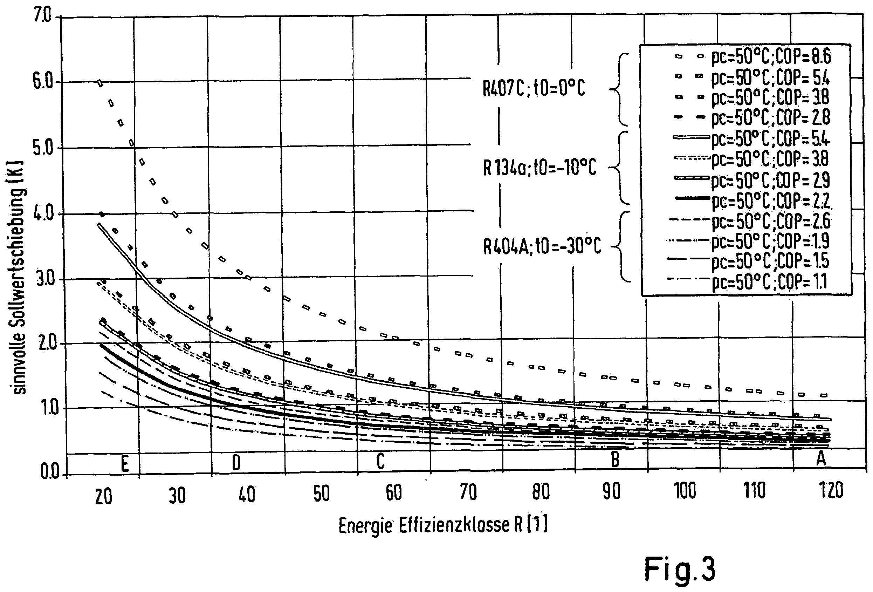

In Fig. 3 wurden einige sinnvolle Werte für die aussentemperaturgeführte Sollwertschiebung bei einer Geräteauslegung mit dt1 = 12 K und einem isentropen Verdichterwirkungsgrad von 0.7 zusammengefasst.

Die "Außentemperaturgeführte Sollwertschiebung" stellt somit eine einfache Möglichkeit dar, den Gesamtenergieverbrauch einer Kälte-/Klimaanlage im Teillastbereich zu reduzieren. Jedoch ist dies nur ein erster Schritt zu einer wirklichen Optimierung.

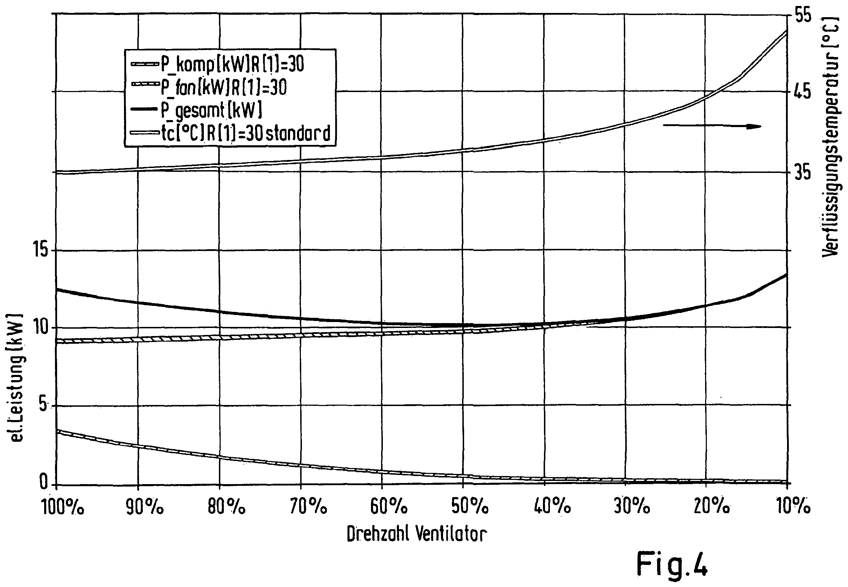

Durch die Erfindung hat sich nämlich herausgestellt, dass die Kenntnis des Betriebspunktes, der den minimalen Energieverbrauch einer Kälte-/Klimaanlage bei den jeweils aktuellen Randbedingungen darstellt, wesentlich ist. Das bedeutet, dass erfindungsgemäss die Verdichterantriebsleistung und Antriebsleistung des Verflüssigerventilators nicht nur reduziert, sondern als Summe minimiert wird, also den energetisch optimierten Betriebspunkt darstellt. Dass es einen solchen minimalen Betriebspunkt geben muss ist ebenfalls eine wesentliche Erkenntnis der Erfindung und wird anhand der Fig. 4 verdeutlicht, die Verflüssigungstemperatur und Leistungsaufnahme von Verdichter und Verflüssiger-Ventilator bei einer Kälteteillast von 40%, Randbedingungen: R134a; t0=-10°C; tLE=27°C, tc_min=30°C zeigt.

Hierbei wird exemplarisch von einer Anlagenteillast von 40% ausgegangen. Bei Variation der Ventilatordrehzahl sind die Leistungsaufnahmen des Ventilators und des Verdichters einzeln aufgetragen. Die Leistungsaufnahme des Ventilators wird als absoluter Wert sowohl von der Energieeffizienzklasse des Verflüssigers als auch von der dritten Potenz seiner aktuellen Drehzahl bestimmt. Die Leistungsaufnahme des Verdichters wird als absoluter Wert vom Kältemittelmassenstrom, also somit von der Teillast, und vom variierenden, aktuellen COP der Anlage beeinflusst. Unter der Annahme, dass die Verdampfungstemperatur konstant gehalten wird, hängt der COP hauptsächlich von der Höhe der Verflüssigungstemperatur ab, die im Diagramm ebenfalls dargestellt ist. Das Kältemittel und der verwendete Verdichter, mit seinem Wirkungsgradkennfeld, wird als gegeben vorausgesetzt.

Wenn die Drehzahl des Ventilators reduziert wird, wird gleichzeitig die Verflüssigungstemperatur steigen, um die feste Kälte-/Klimalast zu erbringen. Dies führt zu einer Verkleinerung des COP's, was sich in einer erhöhten Leistungsaufnahme des Verdichters widerspiegelt. Die Summe der beiden Leistungsaufnahmen zeigt ein erkennbares Minimum bei ca. 50% der Ventilatordrehzahl. Man hat also in diesem Beispiel den energetisch optimalen Betriebspunkt gefunden. Als bekannt und fest vorausgesetzt werden musste das Kältemittel, der Verdichter, die Energieeffizienz des Verflüssigers, die Höhe der Teillast, die Verdampfungstemperatur, die Lufteintrittstemperatur und, in diesem Fall jedoch ohne Wirkung, die minimale Verflüssigungstemperatur.

Im Folgenden wird nun dargestellt, wie ein allgemein gültiges mathematisches Modell zur Beschreibung dieser Aufgabe aussehen kann und welche Aussagen daraus abgeleitet werden können.

Ziel ist es, eine Fundamentalgleichung aufzustellen, die alle möglichen Betriebszustände eines Verflüssigers einer Kälte-/Klimaanlage in Abhängigkeit von den relevanten Einflußgrößen beschreibt.

$$Gl. 2 \qquad f(Q_c, Q_{c_d}, t_c, t_{LE}, dt1_d, n, n_d, ...) = 0$$

In dieser Gleichung sind manche Parameter, die schon bei der Auslegung festgelegt worden sind und nicht variiert werden müssen, wie beispielsweise die Nennverflüssigerleistung Q_c_d, die Nenneintrittstemperaturdifferenz dt1_d oder die Nenndrehzahl der Ventilatoren n_d. Die aktuelle Lufteintrittstemperatur t_LE und die aktuelle Verflüssigerleistung Q_c sind keine festen Werte, werden jedoch bei der Suche nach dem energetischen Minimum nicht variiert, da sie für einen bestimmten Moment als feste Randbedingung betrachtet werden können. Die nicht variierten Größen sind in Gl. 3 unterstrichen.

$$Gl. 3 \qquad f(\underleftrightarrow{Q_c}, \underline{Q_{c_d}}, t_c, \underleftrightarrow{t_{LE}}, \underline{dt1_d}, n, \underline{n_d}, ...) = 0$$

Als variable Größen bleiben die Ventilatordrehzahl n und die Verflüssigungstemperatur tc. Ist eine der beiden bekannt so ergibt sich die andere. Dies könnte man als Auflösung der Fundamentalgleichung nach einer dieser beiden Variablen in Gl. 4 oder Gl. 5 darstellen.

$$Gl. 4 \qquad n = f_n(Q_c, t_c, ...)$$

$$Gl. 5 \qquad t_c = f_{t_c}(Q_c, n, ...)$$

Die analytisch korrekte Auflösung ist jedoch auf Grund der komplizierten und umfangreichen Fundamentalgleichung nicht möglich. Nichtsdestotrotz kann man beliebig viele Zahlenpaare aus tc und n finden, die die Fundamentalgleichung erfüllen. Alle diese Kombinationen aus tc und n stellen mögliche und realisierbare Betriebsbedingungen des Verflüssigers dar.

$$Gl. 6 \qquad \begin{array}{l} f(\underleftrightarrow{Q_c}, \underline{Q_{c_d}}, t_c\langle 1\rangle, \underleftrightarrow{t_{LE}}, \underline{dt1_d}, n\langle 1\rangle, \underline{n_d}, ...) = 0 \\[4pt] f(\underleftrightarrow{Q_c}, \underline{Q_{c_d}}, t_c\langle 2\rangle, \underleftrightarrow{t_{LE}}, \underline{dt1_d}, n\langle 2\rangle, \underline{n_d}, ...) = 0 \\[4pt] f(\underleftrightarrow{Q_c}, \underline{Q_{c_d}}, t_c\langle 3\rangle, \underleftrightarrow{t_{LE}}, \underline{dt1_d}, n\langle 3\rangle, \underline{n_d}, ...) = 0 \\[4pt] \qquad\qquad\qquad\qquad\qquad\vdots \end{array}$$

Zu jedem dieser möglichen Betriebsbedingungen kann die Leistungsaufnahme des Verdichters und der Verflüssigerventilatoren und deren Summe ermittelt werden.

$$Gl. 7 \qquad P_g = P_{el\_Komp} + P_{el\_Venti}$$

$$Gl. 8 \qquad P_g = P_{el\_Komp}(Q_c, COP(KM, t_c, t_0, \eta(t_c, t_0)), ...) + P_{el\_Venti}(R, n, ...)$$

Wie oben bereits beschrieben, stellen die aktuelle Verflüssigerleistung Q_c und der Anlagenwirkungsgrad COP, unter anderem in Abhängigkeit vom Kältemittel und vom Verdichterwirkungsgrad, die Haupteinflüsse für die Leistungsaufnahme des Verdichters dar. Die Haupteinflußfaktoren auf die Leistungsaufnahme der Ventilatoren sind die Energieeffizienz des Verflüssigers und seine Drehzahl. Nun muss man nur noch das Zahlenpaar tc und n heraussuchen, welches die kleinste Gesamtleistungsaufnahme P_g produziert.

$$P_g \langle 1 \rangle = P_{el\_Komp}(t_c \langle 1 \rangle, \ldots) + P_{el\_Venti}(n \langle 1 \rangle, \ldots)$$

$$P_g \langle 2 \rangle = P_{el\_Komp}(t_c \langle 2 \rangle, \ldots) + P_{el\_Venti}(n \langle 2 \rangle, \ldots)$$

Gl. 9

$$P_g \langle 3 \rangle = P_{el\_Komp}(t_c \langle 3 \rangle, \ldots) + P_{el\_Venti}(n \langle 3 \rangle, \ldots)$$

$$\vdots$$

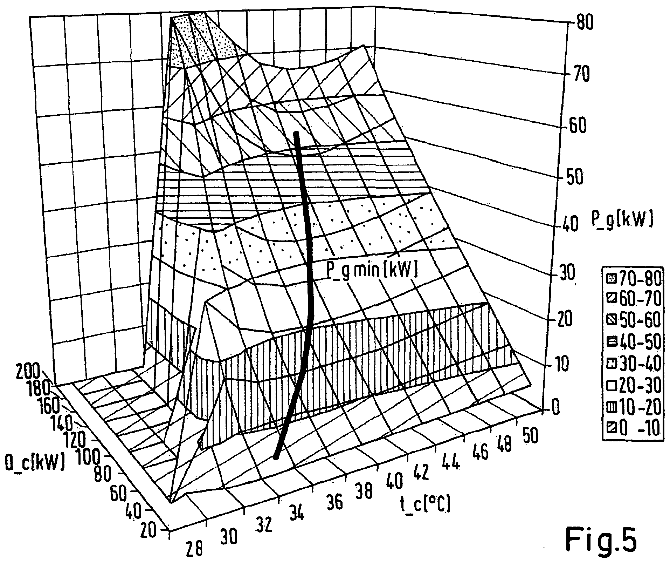

Mathematisch anschaulich gesprochen, gibt es für jede Teillast eine gewölbte Fläche im Raum, deren Minimum gesucht werden muss. Wenn man einen Schritt weiter geht und die Teillast als Parameter hinzunimmt, kann man eine Fläche über die Teillast und die Verflüssigungstemperatur aufspannen, deren Höhe wieder die Gesamtleistungsaufnahme ist. Auf Grund von Gl. 4 könnte man auch die Drehzahl des Verflüssigerventilators anstatt der Verflüssigungstemperatur als zweite Koordinatenachse verwenden, da beide Größen, wenn auch nicht analytisch auflösbar, so doch implizit direkt von einander abhängen. Dies ist anhand der Fig. 5 verdeutlicht, die die Gesamtleistungsaufnahme einer Kälteanlage in Abhängigkeit von der Verflüssigungstemperatur und der aktuellen Verflüssigungsleistung zeigt.

Man findet nun an den jeweils tiefsten Stellen dieser Fläche, man könnte auch sagen im "Bachbett dieses Gebirges", die für jede Teillast energetisch optimale Verflüssigungstemperatur bzw. Ventilatordrehzahl.

Auf Grundlage dieser allgemeinen Zusammenhänge wurden im Rahmen der Erfindung konkrete Gleichungssysteme aufgestellt, die die tatsächlichen Stoffdaten der Kältemittel, die Kennfelder von ausgewählten Verdichterbauarten und die thermische Betriebscharakteristik von bekannten Verflüssigern der Firma Güntner beinhalten. Es stellte sich dabei heraus, dass sich die Gleichungssysteme sehr "gutmütig" verhalten. Die Konvergenzkriterien waren in wenigen Iterationsschritten erfüllbar.

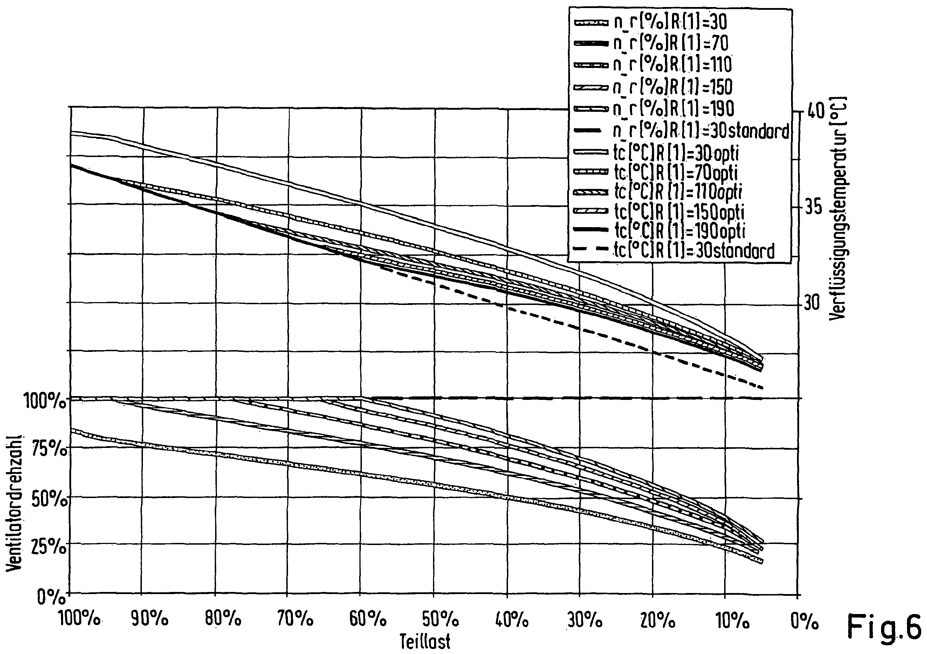

Anhand der Fig. 6 bis 12 werden im Folgenden einige Ergebnisse dieser Optimierungen vorgestellt.

In Fig. 6, die eine erfindungsgemässe optimierte Verflüssigungsregelung im Vergleich zur Standerdregelung mit R134a, t0 = -10°C; tLE 25 °C; tc_min = 25°C zeigt, sind für unterschiedliche Energieeffizienzklassen sowohl die relativen Ventilatordrehzahlen des Verflüssigers, als auch die sich einstellenden Verflüssigungstemperaturen in Abhängigkeit von der Teillast aufgetragen. Es wurde eine Kälteanlage mit einem mittleren Hubkolbenverdichter, dem Kältemittel R134a und einer Verdampfungstemperatur von -10°C, einer Lufteintrittstemperatur von 25°C und einer minimalen Verflüssigungstemperatur von 25°C gewählt. Der Verflüssiger wurde mit einer Eintrittstemperaturdifferenz von 12K ausgelegt. Die gestrichelten Kurven stellen das Verhalten der Anlage bei Standardregelung dar. Bei der Standardregelung wird versucht, ohne Nebenbedingung die minimale Verflüssigungstemperatur zu erreichen und zu halten (Der Sonderfall "Außentemperaturgeführte Sollwertschiebung" wird hier nicht betrachtet).

Bei Volllast der Kälteanlage unterscheiden sich die Betriebszustände zwischen Standardregelung und GMM-eta nicht, bis auf den Verflüssiger mit der schlechtesten Energieeffizienz von 30. Es ist interessant, dass bei diesem Ventilator sogar im Volllastfall das energetische Optimum schon eine Reduzierung der Drehzahl auf 80% erforderlich macht, obwohl sich dadurch die Verflüssigungstemperatur auf über 38.5°C erhöht. Würde dieser Ventilator mit 100% seiner Drehzahl betrieben werden, läge die Verflüssigungstemperatur bei 37°C und trotzdem wäre die Gesamtleistungsaufnahme der Anlage höher als bei 80% Drehzahl.

Je geringer die Kühllast wird, die die Anlage zur Verfügung stellen muss, desto mehr müssen jetzt auch Ventilatoren mit höherer Energieeffizienz in der Drehzahl reduziert werden. Ab einer Teillast von weniger als 50% ist es energetisch sinnvoll auch für einen sehr sparsamen Ventilator, beispielsweise mit einer Energieeffizienz von 190, die Drehzahl zu reduzieren. Eine Standardregelung würde, unabhängig von der Energieeffizienz, den Ventilator auch bei kleinsten Kältelasten immer mit 100% Drehzahl ansteuern, da der Sollwert von 25°C bei Lufteintrittstemperaturen von 25°C nie erreicht werden kann.

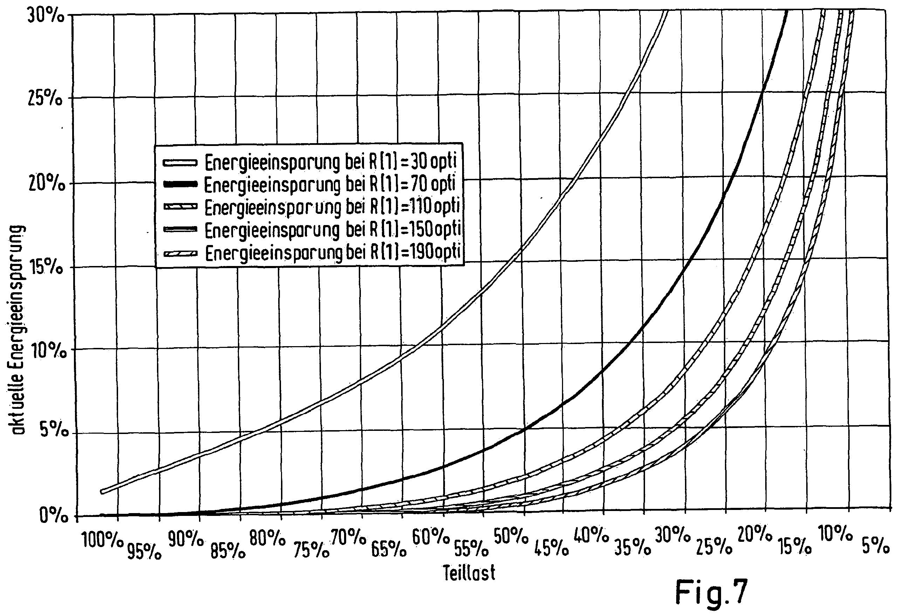

Bisher wurde allgemein von energetisch optimierten Betriebszuständen gesprochen, aber die absoluten Werte des Energieverbrauchs noch nicht quantifiziert. Deswegen sind in Fig. 7, die die Energieeinsparung bei einer erfindungsgemässen optimierten Verflüssigerregelung im Vergleich zur Standardregelung mit R134a, t0 = -10°C; tLE =25°C; tc min =25°C zeigt, die tatsächlichen Energieeinsparungen, wieder in Abhängigkeit von der aktuellen Teillast und für verschiedene Energieeffizienzklassen, dargestellt.

Der erstaunliche Fall, dass ein Verflüssiger mit Energieeffizienz 30 schon im Volllastfall zurückgeregelt werden sollte, relativiert sich jetzt insofern, als dass man dadurch im Vergleich zur Standardregelung nur relativ wenig Energie einsparen kann. Es handelt sich hier also um ein flaches energetisches Minimum. Je weiter man jedoch in den Teillastbereich kommt, desto deutlicher werden die Energieeinsparpotenziale. Die Fig. 7 zeigt zum Beispiel, dass auch bei einem Verflüssiger mit der Energieeffizienz von 110 bei einer Anlagenteillast von 20% mehr als 12% Gesamtenergie im Vergleich zu einer herkömmlichen Standardregelung eingespart werden kann. Man muss jedoch auch beachten, dass die Gesamtleistungsaufnahme in diesem Teillastfall nur noch ca. 15% im Vergleich zum Volllastfall beträgt.

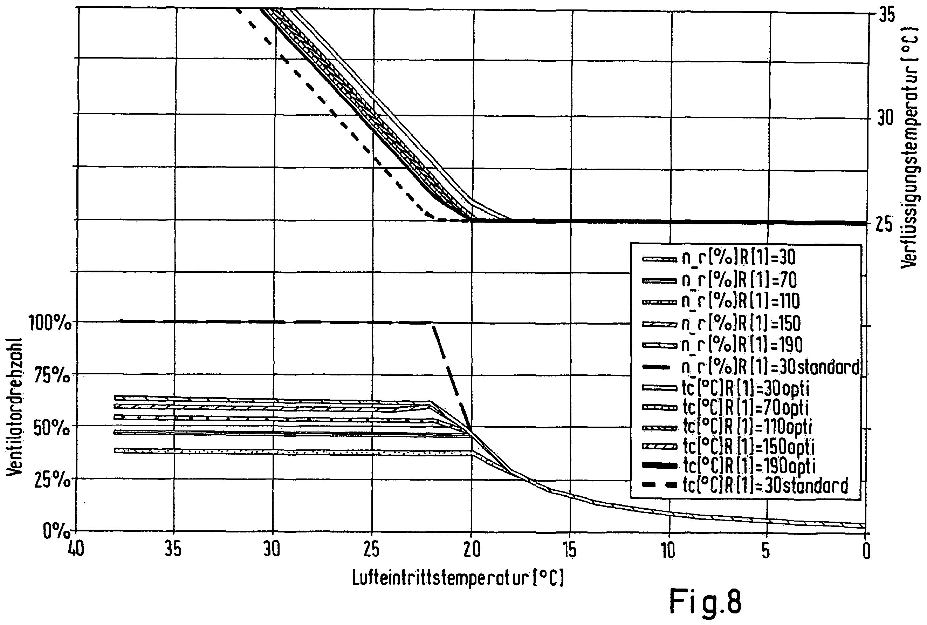

Zum Verständnis von GMM-eta ist eine Auftragung hilfreich, die die Verflüssigungstemperatur und die Drehzahl des Ventilators in Abhängigkeit von der Lufteintrittstemperatur darstellt. In Fig. 8, die eine erfindungsgemässe optimierte Verflüssigungsregelung im Vergleich zur Standregelung mit R134a; t0 = -10°C; Teillast 25%; tc_min = 25°C zeigt, ist so ein Verlauf für eine Teillast von 25% aufgetragen. Bei niedrigen Lufteintrittstemperaturen unterscheiden sich die zwei Regelungsarten nicht, da der Ventilator in gleicher Weise in der Drehzahl reduziert werden muss, um die minimale Verflüssigungstemperatur von 25°C einzuhalten. Ab einem Wert von ca. 20°C Umgebungstemperatur wird die Drehzahl des Ventilators nur noch sehr langsam angehoben. Dadurch steigt die Verflüssigungstemperatur schneller an, als dies bei einer Standregung der Fall gewesen wäre. Die etwas höheren Verflüssigungstemperaturen verursachen jedoch keine so hohen Energiezuwächse, wie die, die durch eine Erhöhung der Drehzahl am Ventilator verursacht worden wären. Auch hier zeigt sich, dass die relativen Drehzahlen der Verflüssiger mit der höheren Energieeffizienz höher liegen können, da eine Verbesserung des COP's stärker ins Gewicht fällt.

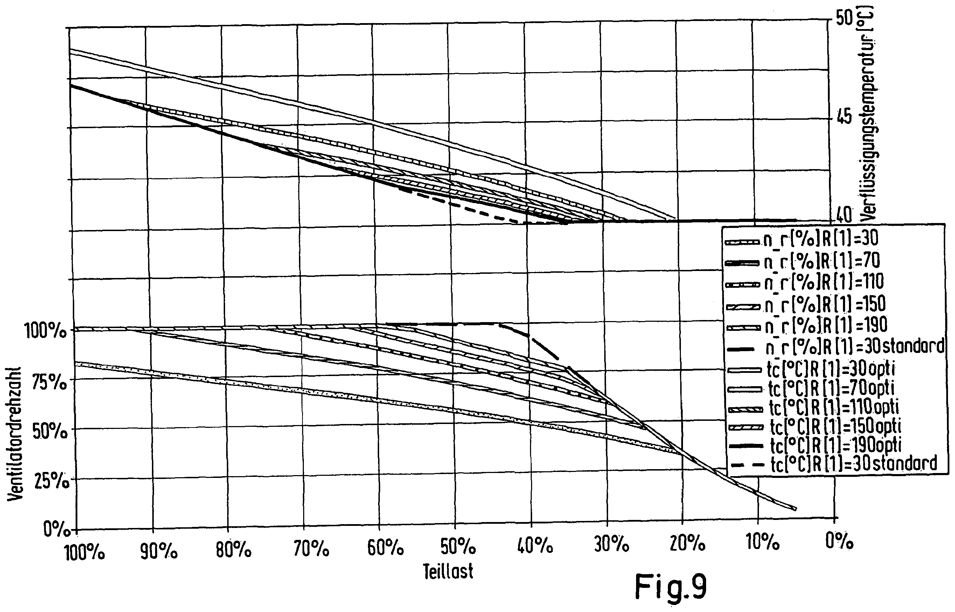

In Fig. 9, die eine erfindungsgemässe optimierte Verflüssigungsregelung im Vergleich zur Standregelung mit R134a; t0 = -10°C; TLE = 35°C; tc_min = 40°C zeigt wurde nun ein hochsommerlicher Tag mit einer Lufteintrittstemperatur von 35°C angenommen und die minimale Verflüssigungstemperatur von 25°C auf 40°C gesetzt. Einen solch hohen Sollwert, der eine energetisch ungünstige Verflüssigungstemperatur erzwingt, findet man in der Realität immer noch recht häufig, da eine genaue Auslegung der Expansionsventile oft noch vernachlässigt wird. Auch unter diesen Randbedingungen findet GMM-eta Einsparpotenziale.

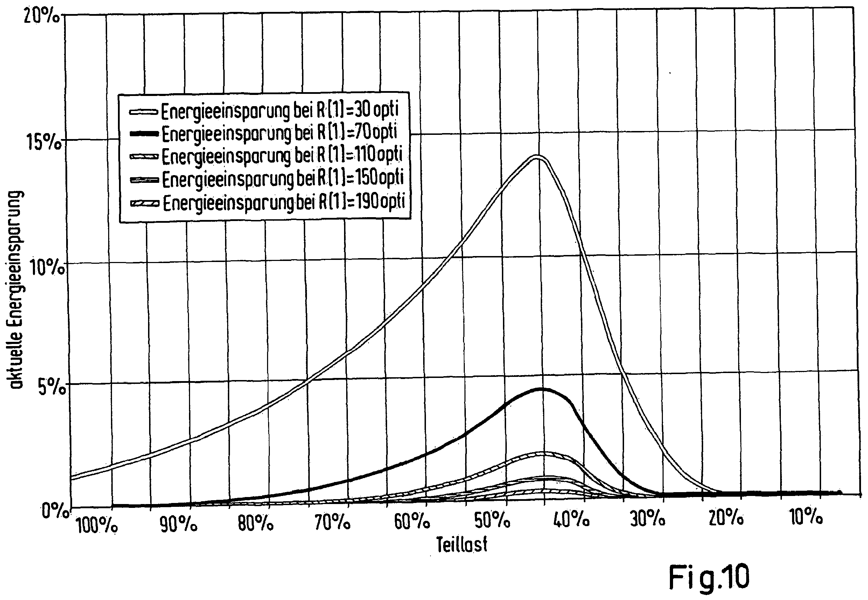

In diesem Fall regelt die Standradregelung ab einer Teillast von 40% die Drehzahl des Ventilators zurück, um die 40°C Verflüssigungstemperatur nicht zu unterschreiten. Auch GMM-eta ist an diesen Sollwert gebunden und regelt in Abhängigkeit von der Energieeffizienz den Ventilator bei Erreichen der 40°C Verflüssigungstemperatur zurück. Bei kleinen Teillasten besteht somit kein Unterschied zwischen GMM-eta und der Standregelung und kann auch ener-getisch nicht mehr besser sein, wie Fig. 10 zeigt, die die Energieeinsparung bei eine optimierten erfindungsgemässen Verflüssigungsregelung im Vergleich zur Standregelung mit R134a; t0 = - 10°C; tLE = 35°C; tc_min = 40°C verdeutlicht. Jedoch im Teillastbereich zwischen 50% und 40% kann man, je nach Energieeffizienz des Verflüssigers, gegenüber der Standregelung immer noch eine merkliche Gesamtleistungsaufnahme einsparen.

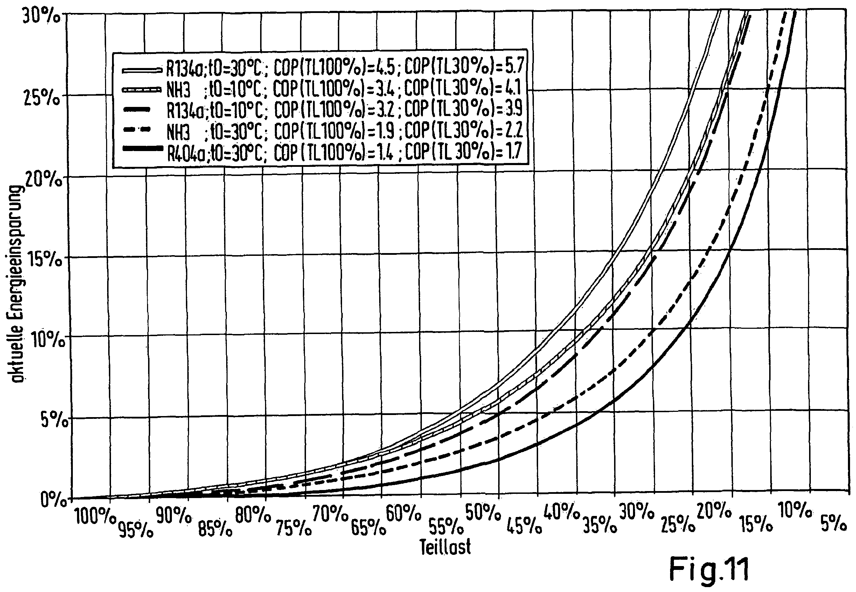

Wie zuvor dargelegt, ist der COP einer Kälte-/Klimaanlage eine der signifikanten Größen, die das Einsparpotenzial durch optimierten Betrieb der Verflüssigerventilatoren beeinflusst. Dies ist einleuchtend, wenn man die immer niedriger werdende Antriebsleistung des Verdichters bei steigendem COP mit der festen Antriebsleistung des Verflüssigerventilators vergleicht. Somit legen auch die Wahl des Kältemittels, die eingestellte Verdampfungstemperatur und der Wirkungsgrad des Verdichters das Einsparpotenzial von GMM-eta fest. Dazu wurden in Fig. 11, die die Energieeinsparung bei einer erfindungsgemäss optimierten Verflüssigungsregelung im Vergleich zur Standregelung mit unter-schiedlichen Kältemitteln und Verdampfungstemperaturen, bei einer Energieeffizienz = 70, tLE = 25°C, tc_min = 25°C zeigt, unterschiedliche Kältemittel bei unterschiedlichen Verdampfungstemperaturen in Abhängigkeit von der Teillast dargestellt.

Wie zu vermuten war, liegt die Klimaanwendung mit R134a und einer Verdampfungstemperatur von 0°C bei den hier betrachteten Einsparungen am Höchsten. Bei einer Normalkühlanwendung mit einer Verdampfungstemperatur von -10°C ist der Einspareffekt zwischen Ammoniak und R134a nahezu gleich. Am Schlechtesten schneidet erwartungsgemäß die Tiefkälteanwendung mit R404a ab, da hier der COP im Vergleich zu den vier anderen Anwendungen am Niedrigsten ist.

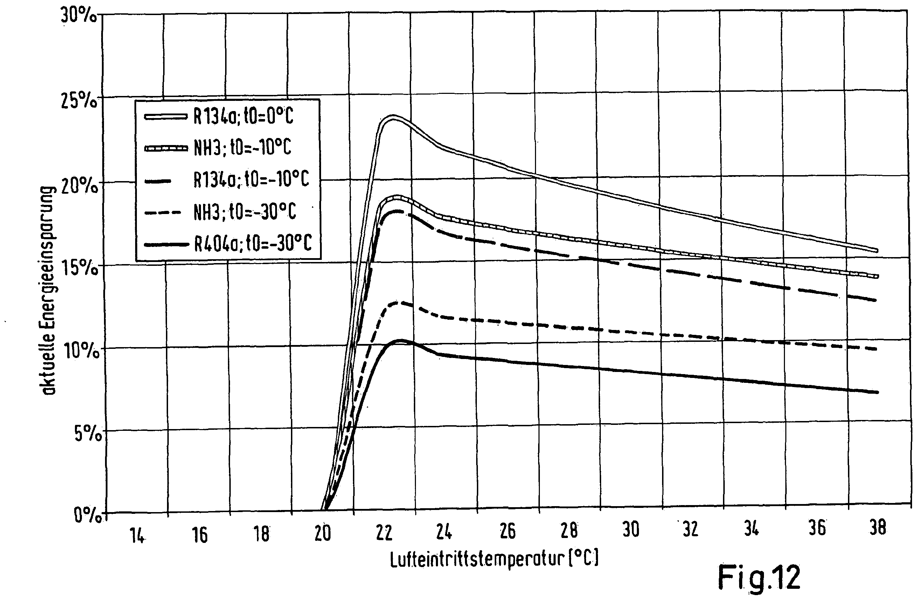

Auch in der Auftragung über die Lufteintrittstemperaturen gemäss Fig. 12, die die Energieeinsparung bei einer erfindungsgemäss optimierten Verflüssigungsregelung im Vergleich zur Standregelung mit unterschiedlichen Kälte-mitteln und Verdampfungstemperaturen, bei einer Energieeffizienz = 70; Teillast = 25%, und tc_min = 25°C zeigt, zeigt sich dieses Verhalten. Zusätzlich ist zu beobachten, dass bei steigenden Lufteintrittstemperaturen die Energieeinsparungen in allen Fällen geringer ausfallen, da sich die COP's auf Grund der steigenden Verflüssigungstemperaturen bei allen Kältekreisläufen verringern und somit mit einer Drehzahlreduzierung am Ventilator nicht mehr so viel eingespart werden kann.

Die Energieeinsparung von GMM-eta beruht auf einer Reduzierung der Drehzahl des Verflüssigerventilators bei gleichzeitig geringerer Zunahme der Verdichterleistung. Ein ausgesprochen erfreulicher Zusatzeffekt neben der Energieeinsparung ist die Schallreduzierung des Verflüssigers, die direkt mit der Drehzahlreduzierung verbunden ist. Gerade an warmen Sommerabenden am Wochenende ist jeder Nachbar über die verminderte Schallemission dankbar und gleichzeitig kann der Anlagenbetreiber Betriebskosten einsparen.

Bei einem für die Praxis besonders wichtigen Ausführungsbeispiel eines erfindungsgemässen Verfahrens wird die Wärmeumwälzmaschine in einem Teillastbetrieb betrieben.

Dabei wird Erfindungsgemäß eine Drehzahl der Strömungsmaschine und eine Verflüssigungstemperatur des Wärmemediums derart ermittelt, dass die Summe der Leistungsaufnahme durch die Strömungsmaschine und den Verdichter minimiert wird.

Im Speziellen kann dabei die Verflüssigungstemperatur und eine Heissgaseintrittstemperatur des Wärmemediums an einem Eintritt des Verflüssigers bestimmt werden.

Zusätzlich oder alternativ kann bei einem anderen Ausführungsbeispiel des eines erfindungsgemässen Verfahrens eine Verdampfungstemperatur des Wärmemediums am Eintritt des Verflüssigers bestimmt werden, und / oder eine Verdampfungstemperatur des Wärmemediums kann als Sollwert vorgegeben und / oder von einer Regelung, eventuell von einer anderen Regelung übergeben werden.

Ebenso ist es möglich, dass eine Temperatur des Kühlfluids an einem Kühlfluideintritt am Verflüssiger bestimmt wird.

Dabei kann im Speziellen sogar auch ein Verschmutzungsgrad des Verflüssigers und / oder des Verdampfers und / oder eines Rückkühlers bestimmt werden, wobei der im Rahmen der Anmeldung beschriebene erfindungsgemässe Algorithmus seine optimierenden Eigenschaften auch dann nicht verliert, wenn einer oder alle Wärmetauscher verschmutzt sind oder aus einem anderen Grund eine Minderleistung aufweisen.

Bei einem für die Praxis ebenfalls wichtigen Ausführungsbeispiel der vorliegenden Erfindung, kann der Verflüssiger als Zwischenwärmetauscher ausgebildet sein und / oder die Wärme des Wärmemediums kann über einen sekundären Kühlmittelkreislauf mittels eines Rückkühlmediums durch den Rückkühler mit dem Kühlfluid ausgetauscht werden und / oder am Rückkühler kann auch zusätzlich oder anternativ eine zweite Strömungsmaschine vorgesehen werden.

Die Erfindung betrifft weiter eine Wärmeumwälzmaschine gemäß Anspruch

Besonders bevorzugt ist die erfindungsgemässe Wärmeumwälzmaschine auch in einem Teillastbetrieb betreibbar. Erfindungsgemäß ist ein Sensor zur Ermittlung einer Drehzahl der Strömungsmaschine und ein Sensor zur Ermittlung einer Verflüssigungstemperatur des Wärmemediums vorgesehen, so dass die Summe der Leistungsaufnahme durch die Strömungsmaschine und den Verdichter minimierbar ist.

Dabei kann alternativ oder zusätzlich zur Ermittlung der Verflüssigungstemperatur und einer Heissgaseintrittstemperatur des Wärmemediums ein Sensor an einem Eintritt des Verflüssigers vorgesehen sein.

Im speziellen ist bevorzugt, jedoch nicht zwingend, zur Ermittlung einer Verdampfungstemperatur des Wärmemediums ein Sensor am Eintritt des Verflüssigers vorgesehen, und / oder eine Verdampfungstemperatur des Wärmemediums ist als Sollwert in einem Datenspeicher gespeichert.

Insbesonder kann zur Bestimmung einer Temperatur des Kühlfluids optional auch ein Temperatursensor an einem Kühlfluideintritt am Verflüssiger vorgesehen sein.

In einem weiteren, für die Praxis besonders bedeutenden Ausführungsbeispiel ist der Verflüssiger als Zwischenwärmetauscher ausgebildet und die Wärme des Wärmemediums ist mittels eines Rückkühlmediums über einen sekundären Kühlmittelkreislauf durch einen Rückkühler mit dem Kühlfluid austauschbar, wobei am Zwischenwärmetauscher bevorzugt eine zweite Strömungsmaschine vorgesehen ist.

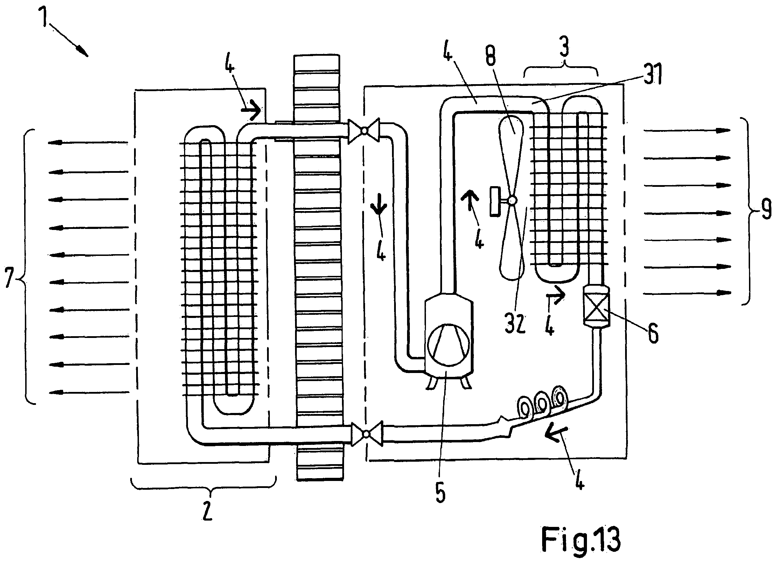

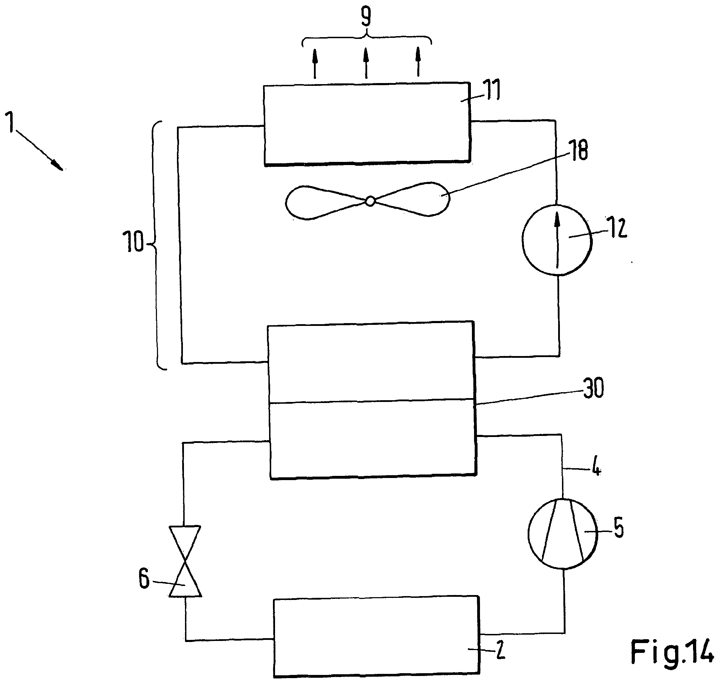

Im Folgenden werden noch zwei wichtige Ausführungsbeispiele erfindungsgemässer Wärmeumwälzmaschinen anhand der rein schematischen Fig. 13 und 14 näher erläutert. Die ebenfalls im Folgenden aufgelisteten Fig. 1 bis 12, die teilweise den Stand der Technik und teilweise konkrete Ausführungsvarianten erfindungsgemässer Verfahren betreffen, wurden bereits weiter oben erläutert und bedürfen daher keiner weiteren Diskussion mehr. Es zeigen:

Fig. 1    Diagramm gemäss einer bekannten Standardverflüssigungsregelung mit tc_soll = 25°C bei einer Geräteauslegung mit dt1 = 12 K;

Fig. 2    Aussentemperaturgeführte Sollwertverschiebung mit tc_soll = 25 °C und einer Schiebung 4 K bei einer Geräteauslegung mit dt1 = 12 K;

Fig. 3    Sinnvolle Werte für die aussentemperaturgeführte Sollwertverschiebung bei einer Geräteauslegung mit dt1 = 12 K und einem isentropen Verdichterwirkungsgrad von 0.7;

Fig. 4    Verflüssigertemperatur und Leistungsaufnahme von Verdichter und Verflüssiger-Ventilator bei einer Kälteteillast von 40%, Randbedingungen: R134a; t0 = -10°C; tLE = 27°C; tc_min = 30°C;

Fig. 5    Gesamtleistungsaufnahme einer Kälteanlage in Abhängigkeit von der Verflüssigungstemperatur und der aktuellen Verflüssigungsleistung ;

Fig. 6    optimierte Verflüssigungsregelung im Vergleich zur Standardregelung, R134a; t0 = -10°C; tLE = 25 °C; tc_min = 25°C;

Fig. 7    Energieeinsparung bei optimierter Verflüssigungsregelung im Vergleich zur Standardregelung, R134a; t0 = -10°C; tLE = 25 °C; tc_min = 25°C;

Fig. 8    optimierte Verflüssigungsregelung im Vergleich zur Standardregelung, R134a; t0 = -10°C; Teillast 25%; tc_min = 25 °C ;

Fig. 9    optimierte Verflüssigungsregelung im Vergleich zur Standardregelung, R134a; t0 = -10°C; tLE = 35°C; tc_min = 40°C;

Fig. 10   Energieeinsparung bei optimierter Verflüssigungsregelung im Vergleich zur Standardregelung, R134a; t0 = -10°C; tLE = 35°C; tc_min = 40°C;

Fig. 11   Energieeinsparung bei optimierter Verflüssigungsregelung im Vergleich zur Standardregelung bei unterschiedlichen Kältemitteln und Verdampfungstemperaturen; Energieeffizienz = 70, R134a; tLE = 25°C; tc_min = 25°C;

Fig. 12   Energieeinsparung bei optimierter Verflüssigungsregelung im Vergleich zur Standardregelung bei unterschiedlichen Kältemitteln und Verdampfungstemperaturen; Energieeffizienz = 70, R134a; Teillast = 25%; tc_min = 25°C;

Fig. 13   ein erstes Ausführungsbeispiel einer erfindungsgemässen Wärmeumwälzmaschine;

Fig. 14   ein Ausführungsbeispiel einer Wärmeumwälzmaschine mit Zwischenwärmetauscher und Rückkühler.

In Fig. 13 und Fig. 14 ist in einer schematischen Darstellung je ein Ausführungsbeispiel einer erfindungsgemässen Wärmeumwälzmaschine dargestellt, die im Folgenden gesamthaft mit dem Bezugszeichen 1 bezeichnet ist.

Die Wärmeumwälzmaschine 1 gemäss Fig. 13 umfasst derart einen als Verdampfer 2 ausgestalteten ersten Wärmetauscher und einen als Verflüssiger 3 ausgestalteten zweiten Wärmetauscher, dass im Betriebszustand ein Wärmemedium 4 vom Verdampfer 2 einem Verdichter 5 zuführbar ist, vom Verdichter 5 auf einen Verflüssigungsdruck verdichtbar, dem Verflüssiger 3 zuführbar und verflüssigbar ist, und über ein Druckentspannungsmittel 6, das z.B. ein Drosselventil sein kann, dem Verdampfer 2 wieder rückführbar und unter Aufnahme von Wärme aus einem zu kühlenden Prozessfluid 7 wieder verdampfbar ist. Dabei ist eine Strömungsmaschine 8 in Form eines Ventilators am Verflüssiger 3 vorgesehen, so dass Wärme vom Wärmemedium 4 auf das Kühlfluid 9, das im gezeigten Beispiel der Fig. 13 Umgebungsluft ist, übertragbar ist. Gemäss der Erfindung ist die Strömungsmaschine 8 und der Verdichter 5 mittels einer aus Gründen der Übersichtlichkeit nicht explizit dargestellten Ansteuervorrichtung derart ansteuerbar, dass in Abhängigkeit von einer vorgebbaren thermischen Nutzleistung der Wärmeumwälzmaschine 1 eine Summe einer Leistungsaufnahme durch die Strömungsmaschine 8 und den Verdichter 5 minimierbar ist.

Das Ausführungsbeispiel gemäss Fig. 14 unterscheidet sich von demjenigen der Fig. 13 dabei nur dadurch, dass der Verflüssiger 3, 30 als Zwischenwärmetauscher 30 ausgebildet ist und die Wärme des Wärmemediums 4 mittels eines Rückkühlmediums 12 über einen sekundären Kühlmittelkreislauf 10 durch einen Rückkühler 11 mit dem Kühlfluid 9 austauschbar ist, wobei am Zwischenwärmetauscher 30 eine zweite Strömungsmaschine 18 vorgesehen ist, und daher auf die Strömungsmaschine 8 am Verflüssiger 3 verzichtet werden konnte.

In beiden Ausführungsbeispielen kühlt dabei der Verdampfer 2 in an sich bekannter Weise das Prozessfluid 7, mit dem dann seinerseits z.B. ein Raum in einem Gebäude auf eine vorgebbare Temperatur gekühlt werden kann.

Dabei weist die Wärmeumwälzmaschine 1 einen nicht dargestellten Sensor zur Ermittlung einer Drehzahl der Strömungsmaschine 8 und einen Sensor zur Ermittlung einer Verflüssigungstemperatur des Wärmemediums 4 aufweisen, so dass die Summe der Leistungsaufnahme durch die Strömungsmaschine 8 und den Verdichter 5 minimierbar ist. Auch ist es möglich, dass ein ebenfalls in Fig. 13 nicht explizit dargestellter Sensor zur Ermittlung der Verflüssigungstemperatur und / oder einer Heissgaseintrittstemperatur des Wärmemediums 4 z.B. an einem Eintritt 31 des Verflüssigers 3 vorgesehen ist.

Dabei ist es auch möglich, dass zur Ermittlung einer Verdampfungstemperatur des Wärmemediums 4 ein Sensor am Eintritt 31 des Verflüssigers 3 vorgesehen ist, oder es kann eine Verdampfungstemperatur des Wärmemediums 4 als Sollwert in einem Datenspeicher gespeichert ist. Ausserdem könnte auch zur Bestimmung einer Temperatur des Kühlfluids 9 ein nicht dargestellter Temperatursensor an einem Kühlfluideintritt 32 am Verflüssiger 3, 30 vorgesehen.

Durch die vorliegende Erfindung konnte erstmals demonstriert werden, dass eine energetisch optimierte Drehzahlregelung von Verflüssigerventilatoren im Vergleich zu Standardregelungen, die ausschließlich P- oder PI-Regler sind, zu einer merklichen Energieeinsparung bei der Summe von Verdichter- und Verflüssigerantriebsleistung führen kann. Insbesondere bei Anlagenteillast, hohen Lufteintrittstemperaturen und niedrigen minimalen Verflüssigungstemperaturen führt die Standardregelung zu sehr energieineffizienten Betriebszuständen. Die Energieeinsparung wird unter anderem dadurch verständlich, dass die Leistungsaufnahme eines Ventilators mit der dritten Potenz zu seiner Drehzahl, sein Luftvolumenstrom jedoch näherungsweise linear zunimmt. Notwendig für die energieoptimierte Regelung ist neben der schon immer verwendeten Verflüssigungstemperatur nun auch die Kenntnis der Lufteintrittstemperatur am Verflüssiger, um die Verflüssigerleistung auf die Leistung der Kälte-/Klimaanlage, die bekanntermaßen vom Kältemittel, den Druckniveaus und den Verdichterwirkungsgraden bestimmt wird, abzugleichen.

**Patentansprüche**

1. Verfahren zur Minimierung eines Energieverbrauchs einer Wärmeumwälzmaschine (1), wobei die Wärmeumwälzmaschine (1) einen als Verdampfer (2) ausgestalteten ersten Wärmetauscher und einen als Verflüssiger (3, 30) ausgestalteten zweiten Wärmetauscher umfasst, und im Betriebszustand ein Wärmemedium (4) vom Verdampfer (2) einem Verdichter (5) zugeführt wird, vom Verdichter (5) auf einen Verflüssigungsdruck verdichtet, dem Verflüssiger (3, 30) zugeführt und verflüssigt wird, und über ein Druckentspannungsmittel (6) dem Verdampfer (2) wieder zurückgeführt und unter Aufnahme von Wärme aus einem zu kühlenden Prozessfluid (7) wieder verdampft wird, wobei eine Strömungsmaschine (8, 18) vorgesehen wird, so dass Wärme vom Wärmemedium (4) auf das Kühlfluid (9) übertragen wird, **gekennzeichnet durch** die weiteren Verfahrensschritte:

   - formulieren eines mehrdimensionalen, numerischen Modells der Wärmeumwälzmaschine (1), welches die Betriebszustände des Verflüssigers (3, 30) in Funktion einer Drehzahl der Strömungsmaschine (8) und einer Verflüssigungstemperatur des Wärmemediums (4) abbildet;
   - bilden von Wertepaaren aus Drehzahlwerten der Strömungsmaschine (8) und Verflüssigungstemperaturen des Wärmemediums (4), welche mögliche und realisierbare Betriebsbedingungen des Verflüssigers (3, 30) modellieren;
   - ermitteln einer Summe der Leistungsaufnahme des Verdichters (5) und der Strömungsmaschine (8) zu jedem der möglichen und realisierbaren Betriebsbedingung;
   - ermitteln eines optimierten Wertepaares bei welchem die Summe der Leistungsaufnahme durch die Strömungsmaschine (8, 18) und des Verdichters (5), unter Berücksichtigung der thermischen Nutzleistung der Wärmeumwälzmaschine (1) minimiert ist;
   - ansteuern der Strömungsmaschine (8, 18) und des Verdichters (5) basiert auf den Parametern des optimierten Wertepaares.

2. Verfahren nach Anspruch 1, wobei die Wärmeumwälzmaschine (1) in einem Teillastbetrieb betrieben wird.

3. Verfahren nach einem der vorangehenden Ansprüche, wobei die Verflüssigungstemperatur und eine Heissgaseintrittstemperatur des Wärmemediums (4) an einem Eintritt (31) des Verflüssigers (3, 30) bestimmt werden.

4. Verfahren nach einem der vorangehenden Ansprüche, wobei eine Verdampfungstemperatur des Wärmemediums (4) am Eintritt (31) des Verflüssigers (3, 30) bestimmt wird, oder wobei eine Verdampfungstemperatur des Wärmemediums (4) als Sollwert vorgegeben und / oder von einer Regelung übergeben wird.

5. Verfahren nach einem der vorangehenden Ansprüche, wobei eine Temperatur des Kühlfluids (9) an einem Kühlfluideintritt (32) am Verflüssiger (3, 30) bestimmt wird.

6. Verfahren nach einem der vorangehenden Ansprüche, wobei ein Verschmutzungsgrad des Verflüssigers (3, 30) und / oder des Verdampfers (2) und / oder eines Rückkühlers (11) bestimmt wird.

7. Verfahren nach einem der vorangehenden Ansprüche, wobei der Verflüssiger (3, 30) als Zwischenwärmetauscher (30) ausgebildet ist und die Wärme des Wärmemediums (4) über einen sekundären Kühlmittelkreislauf (10) mittels eines Rückkühlmediums (12) durch den Rückkühler (11) mit dem Kühlfluid (9) ausgetauscht wird und / oder am Rückkühler (11) eine zweite Strömungsmaschine (18) vorgesehen ist

8. Wärmeumwälzmaschine (1), wobei die Wärmeumwälzmaschine einen als Verdampfer (2) ausgestalteten ersten Wärmetauscher und einen als Verflüssiger (3, 30) ausgestalteten zweiten Wärmetauscher derart umfasst, dass im Betriebszustand ein Wärmemedium (4) vom Verdampfer (2) einem Verdichter (5) zuführbar ist, vom Verdichter (5) auf einen Verflüssigungsdruck verdichtbar, dem Verflüssiger (3, 30) zuführbar und verflüssigbar ist, und über ein Druckentspannungsmittel (6) dem Verdampfer (2) wieder rückführbar und unter Aufnahme von Wärme aus einem zu kühlenden Prozessfluid (7) wieder verdampfbar ist, wobei eine Strömungsmaschine (8, 18) vorgesehen ist, so dass Wärme vom Wärmemedium (4) auf das Kühlfluid (9) übertragbar ist, **dadurch gekennzeichnet, dass** ein erster Sensor zur Ermittlung einer aktuellen Drehzahl der Strömungsmaschine (8, 18) und ein zweiter Sensor zur Ermittlung einer aktuellen Verflüssigungstemperatur des Wärmemediums (4) vorgesehen ist, und die Wärmeumwälzmaschine (1) eine Ansteuervorrichtung umfasst die angeordnet ist um:

   - mittels eines mehrdimensionalen, numerisches Modelles der Wärmeumwälzmaschine (1), welches die Betriebszustände des Verflüssigers (3, 30) in Funktion einer Drehzahl der Strömungsmaschine (8) und einer Verflüssigungstemperatur des Wärmemediums (4) abbildet, Wertepaare aus Drehzahlwerten der Strömungsmaschine (8) und Verflüssigungstemperaturen des Wärmemediums (4) zu bilden, welche mögliche und realisierbare Betriebsbedingungen des Verflüssigers (3, 30) modellieren;

- einer Summe der Leistungsaufnahme des Verdichters (5) und der Strömungsmaschine (8) zu jedem der möglichen und realisierbaren Betriebsbedingung zu ermitteln;

- eine optimiertes Wertepaar, bei welchem die Summe der Leistungsaufnahme durch die Strömungsmaschine (8, 18) und des Verdichters (5), unter Berücksichtigung der thermischen Nutzleistung der Wärmeumwälzmaschine (1), minimiert ist, zu ermitteln;

- die Strömungsmaschine (8, 18) und der Verdichter (5) basiert auf den Parametern des optimierten Wertepaares, unter Berücksichtigung der aktuell ermittelten Werten des ersten und zweiten Sensors, zu regeln.

**9.** Wärmeumwälzmaschine nach Anspruch 8, wobei die Wärmeumwälzmaschine (1) in einem Teillastbetrieb betreibbar ist.

**10.** Wärmeumwälzmaschine nach einem der Ansprüche 8 bis 9, wobei zur Ermittlung der Verflüssigungstemperatur und einer Heissgaseintrittstemperatur des Wärmemediums (4) ein Sensor an einem Eintritt (31) des Verflüssigers (3, 30) vorgesehen ist.

**11.** Wärmeumwälzmaschine nach einem der Ansprüche 8 bis 10, wobei zur Ermittlung einer Verdampfungstemperatur des Wärmemediums (4) ein Sensor am Eintritt (31) des Verflüssigers (3, 30) vorgesehen ist, oder wobei eine Verdampfungstemperatur des Wärmemediums (4) als Sollwert in einem Datenspeicher gespeichert ist.

**12.** Wärmeumwälzmaschine nach einem der Ansprüche 8 bis 11, wobei zur Bestimmung einer Temperatur des Kühlfluids (9) ein Temperatursensor an einem Kühlfluideintritt (32) am Verflüssiger (3, 30) vorgesehen ist.

**13.** Wärmeumwälzmaschine nach einem der Ansprüche 8 bis 12, wobei der Verflüssiger (3, 30) als Zwischenwärmetauscher (30) ausgebildet ist und die Wärme des Wärmemediums (4) mittels eines Rückkühlmediums (12) über einen sekundären Kühlmittelkreislauf (10) durch einen Rückkühler (11) mit dem Kühlfluid (9) austauschbar ist, wobei am Zwischen Wärmetauscher (30) bevorzugt eine zweite Strömungsmaschine (18) vorgesehen ist.

**Claims**

**1.** Method for minimizing an energy consumption of a heat-circulation machine (1), wherein the heat-circulation machine (1) comprises a first heat exchanger designed as an evaporator (2) and a second heat exchanger designed as a condenser (3, 30), and in the operating state a heat medium (4) is supplied from the evaporator (2) to a compressor (5), is compressed by the compressor (5) to a condensation pressure, is fed to the condenser (3, 30) and liquefied, and is returned to the evaporator (2) via a pressure-relief means (6) and is evaporated again while absorbing heat from a process fluid (7) to be cooled, wherein a turbomachine (8, 18) is being provided so that heat is transferable from the heat medium (4) to the cooling fluid (9), **characterized by** the further method steps:

- formulating a multi-dimensional, numerical model of the heat-circulation machine (1), which maps the operating states of the condenser (3, 30) as a function of a rotational speed of the turbomachine (8) and a liquefaction temperature of the heat medium (4);

- forming pairs of values from rotational speed values of the turbomachine (8) and condensation temperatures of the heat medium (4), which model possible and realizable operating conditions of the condenser (3, 30);

- determining a sum of the power consumption of the compressor (5) and the fluid machine (8) at each of the possible and realizable operating conditions;

- determining an optimized pair of values at which the sum of the power consumption by the turbomachine (8, 18) and the compressor (5) is minimized, taking into account the useful thermal output of the heat-circulation machine (1);

- controlling the turbomachine (8, 18) and the compressor (5) based on the parameters of the optimized pair of values.

**2.** Method according to claim 1, wherein the heat-circulation machine (1) is operated in a partial load mode.

**3.** Method according to one of the preceding claims, wherein the condensation temperature and a hot gas inlet temperature of the heat medium (4) are determined at an inlet (31) of the condenser (3, 30).

4. Method according to one of the preceding claims, wherein an evaporation temperature of the heat medium (4) is determined at an inlet (31) of the condenser (3, 30), or wherein an evaporation temperature of the heat medium (4) is preset as a setpoint value and/or is transferred by a control system.

5. Method according to one of the preceding claims, wherein a temperature of the cooling fluid (9) is determined at a cooling fluid inlet (32) at the condenser (3, 30).

6. Method according to one of the preceding claims, wherein a degree of contamination of the condenser (3, 30) and/or the evaporator (2) and/or a re-cooler (11) is determined.

7. Method according to one of the preceding claims, wherein the condenser (3, 30) is constructed as an intermediate heat exchanger (30) and the heat of the heat medium (4) is exchanged with the cooling fluid (9) via a secondary coolant circuit (10) by means of a re-cooling medium (12) through the re-cooler (11) and/or a second turbomachine (18) is provided on the re-cooler (11), **characterized in that** the re-cooler (11) is provided with an intermediate heat exchanger (30) and the heat of the heat medium (4) is exchanged with the cooling fluid (9) via a secondary coolant circuit (10) by means of a re-cooling medium (12).

8. Heat-circulation machine (1), the heat-circulation machine comprising a first heat exchanger designed as an evaporator (2) and a second heat exchanger designed as a condenser (3, 30) in such a way that, in the operating state, a heat medium (4) can be fed from the evaporator (2) to a compressor (5), can be compressed by the compressor (5) to a liquefaction pressure, can be fed to the condenser (3, 30) and liquefied, and can be returned to the evaporator (2) via a pressure-relief means (6) and can be evaporated again by absorbing heat from a process fluid (7) to be cooled, wherein a turbomachine (8, 18) is provided so that heat can be transferred from the heat medium (4) to the cooling fluid (9), **characterized in that** a first sensor is provided for determining a current rotational speed of the turbomachine (8, 18) and a second sensor is provided for determining a current liquefaction temperature of the heat medium (4), and the heat-circulation machine (1) comprises a control device which is arranged:

   - to formulate a multi-dimensional, numerical model of the heat-circulation machine (1), which maps the operating states of the condenser (3, 30) as a function of a rotational speed of the turbomachine (8) and a liquefaction temperature of the heat medium (4);
   - to form pairs of values from rotational speed values of the turbomachine (8) and condensation temperatures of the heat medium (4), which model possible and realizable operating conditions of the condenser (3, 30);
   - to determine a sum of the power consumption of the compressor (5) and the fluid machine (8) at each of the possible and realizable operating conditions;
   - to determine an optimized pair of values at which the sum of the power consumption by the turbomachine (8, 18) and the compressor (5) is minimized, taking into account the useful thermal output of the heat-circulation machine (1);
   - to control the turbomachine (8, 18) and the compressor (5) based on the parameters of the optimized pair of values.

9. Heat-circulation machine according to claim 8, wherein the heat-circulation machine (1) is operable in a partial load operation.

10. Heat-circulation machine according to one of claims 8 to 9, wherein a sensor is provided at an inlet (31) of the condenser (3, 30) for determining the condensation temperature and a hot gas inlet temperature of the heat medium (4).

11. Heat-circulation machine according to one of claims 8 to 10, wherein a sensor is provided at an inlet (31) of the condenser (3, 30) for determining an evaporation temperature of the heat medium (4), or wherein an evaporation temperature of the heat medium (4) is stored as a setpoint value in a data memory.

12. Heat-circulation machine according to one of claims 8 to 11, wherein a temperature sensor is provided at a cooling fluid inlet (32) on the condenser (3, 30) for determining a temperature of the cooling fluid (9).

13. Heat-circulation machine according to one of the claims 8 to 12, wherein the condenser (3, 30) is constructed as an intermediate heat exchanger (30) and the heat of the heat medium (4) can be exchanged with the cooling fluid (9) by means of a re-cooling medium (12) via a secondary coolant circuit (10) through a re-cooler (11), wherein a second turbomachine (18) is preferably provided at the intermediate heat exchanger (30).

**Revendications**

1.  Un procédé pour minimiser une consommation d'énergie d'une machine à circulation de chaleur (1), dans lequel la machine à circulation de chaleur (1) comprend un premier échangeur de chaleur conçu comme un évaporateur (2) et un deuxième échangeur de chaleur conçu comme un condenseur (3, 30), et, à l'état de fonctionnement, un médium thermique (4) est amené de l'évaporateur (2) à un compresseur (5), est comprimé par le compresseur (5) à une pression de condensation, est amené au condenseur (3, 30) et est liquéfié, et est renvoyé à l'évaporateur (2) via un moyen de détente de pression (6) et est à nouveau évaporé, en absorbant la chaleur d'un fluide de processus (7) à refroidir, dans lequel une machine d'écoulement (8, 18) est prévue de sorte que la chaleur est transférée du médium thermique (4) au fluide de refroidissement (9), **caractérisé par** les étapes suivantes du processus :

    - Formuler un modèle numérique multidimensionnel de la machine à circulation de chaleur (1), qui représente les états de fonctionnement du condenseur (3, 30) en fonction d'une vitesse de rotation de la machine d'écoulement (8) et d'une température de condensation du médium thermique (4) ;
    - Former de paires de valeurs à partir des valeurs de vitesse de rotation de la machine d'écoulement (8) et des températures de condensation du médium thermique (4), qui modélisent les conditions de fonctionnement possibles et réalisables du condenseur (3, 30) ;
    - Déterminer une somme de la puissance absorbée du compresseur (5) et de la machine d'écoulement (8) dans chacune des conditions de fonctionnement possibles et réalisables ;
    - Déterminer une paire de valeurs optimisée à laquelle la somme de la puissance absorbée par la machine d'écoulement (8, 18) et du compresseur (5) est minimisée, en tenant compte de la puissance nette thermique de la machine à circulation de chaleur (1) ;
    - Commander la machine d'écoulement (8, 18) et le compresseur (5) basé sur les paramètres de la paire de valeurs optimisées.

2.  Un procédé selon la revendication 1, dans lequel la machine à circulation de chaleur (1) est fonctionnée dans un mode de charge partielle.

3.  Un procédé selon l'une des revendications précédentes, dans lequel la température de condensation et une température d'entrée de gaz chaud du médium thermique (4) sont déterminées à une entrée (31) du condenseur (3, 30).

4.  Un procédé selon l'une des revendications précédentes, dans lequel une température d'évaporation du médium thermique (4) est déterminée à l'entrée (31) du condenseur (3, 30), ou dans lequel une température d'évaporation du médium thermique (4) est prédéterminée comme valeur de consigne et/ou est transmise par un système de régulation.

5.  Un procédé selon l'une des revendications précédentes, dans lequel une température du fluide de refroidissement (9) est déterminée à une entrée de fluide de refroidissement (32) au niveau du condenseur (3, 30).

6.  Un procédé selon l'une des revendications précédentes, dans lequel un degré d'encrassement du condenseur (3, 30) et/ou de l'évaporateur (2) et/ou d'un refroidisseur (11) est déterminé.

7.  Un procédé selon l'une des revendications précédentes, dans lequel le condenseur (3, 30) est conçu comme un échangeur de chaleur intermédiaire (30) et la chaleur du médium thermique (4) est échangée avec le fluide de refroidissement (9) via un circuit de refroidissement secondaire (10) au moyen d'un médium de refroidissement (12) à travers le refroidisseur (11) et/ou une deuxième machine d'écoulement (18) est prévue sur le refroidisseur (11).

8.  Une machine à circulation de chaleur (1), dans laquelle la machine à circulation de chaleur comprend un premier échangeur de chaleur conçu comme un évaporateur (2) et un deuxième échangeur de chaleur conçu comme un condenseur (3, 30) de telle sorte que, à l'état de fonctionnement, un médium thermique (4) peut être amené de l'évaporateur (2) à un compresseur (5), peut être comprimé par le compresseur (5) à une pression de condensation, peut être amené au condenseur (3, 30) et peut être liquéfié, et peut être renvoyé à l'évaporateur (2) via un moyen de détente de pression (6) et peut être à nouveau évaporé, en absorbant la chaleur d'un fluide de processus (7) à refroidir, dans lequel une machine d'écoulement (8, 18) est prévue de sorte que la chaleur peut être transférée du médium thermique (4) au fluide de refroidissement (9), **caractérisé en ce qu'**un premier capteur est prévu pour déterminer une vitesse de rotation actuelle de la machine d'écoulement (8, 18) et un deuxième capteur est prévu pour déterminer une température de condensation actuelle du médium thermique (4), et la machine à circulation de chaleur (1) comprend un dispositif de contrôle qui est disposé pour:

- Former de paires de valeurs à partir des valeurs de vitesse de rotation de la machine d'écoulement (8) et des températures de condensation du médium thermique (4), qui modélisent les conditions de fonctionnement possibles et réalisables du condenseur (3, 30) au moyen d'un modèle numérique multidimensionnel de la machine à circulation de chaleur (1), qui représente les états de fonctionnement du condenseur (3, 30) en fonction d'une vitesse de rotation de la machine d'écoulement (8) et d'une température de condensation du médium thermique (4) ;

- Déterminer une somme de la puissance absorbée du compresseur (5) et de la machine d'écoulement (8) dans chacune des conditions de fonctionnement possibles et réalisables ;

- Déterminer une paire de valeurs optimisée à laquelle la somme de la puissance absorbée par la machine d'écoulement (8, 18) et du compresseur (5) est minimisée, en tenant compte de la puissance nette thermique de la machine à circulation de chaleur (1);

- Régler la machine d'écoulement (8, 18) et le compresseur (5) basé sur les paramètres de la paire de valeurs optimisées, en tenant compte des valeurs actuellement déterminées du premier et du deuxième capteur.

9. Une machine à circulation de chaleur selon la revendication 8, dans laquelle la machine à circulation de chaleur (1) peut être fonctionnée dans un mode de charge partielle.

10. Une machine à circulation de chaleur selon l'une des revendications 8 à 9, dans laquelle un capteur est prévu à une entrée (31) du condenseur (3, 30) pour déterminer la température de condensation et une température d'entrée de gaz chaud du médium thermique (4).

11. Une machine à circulation de chaleur selon l'une des revendications 8 à 10, dans laquelle un capteur est prévu à l'entrée (31) du condenseur (3, 30) pour déterminer une température d'évaporation du médium thermique (4), ou dans laquelle une température d'évaporation du médium thermique (4) est enregistrée comme valeur de consigne dans une mémoire de données.

12. Une machine à circulation de chaleur selon l'une des revendications 8 à 11, dans laquelle un capteur de température est prévu à une entrée de fluide de refroidissement (32) sur le condenseur (3, 30) pour déterminer une température du fluide de refroidissement (9).

13. Une machine à circulation de chaleur selon l'une des revendications 8 à 12, dans laquelle le condenseur (3, 30) est conçu comme un échangeur de chaleur intermédiaire (30) et la chaleur du médium thermique (4) peut être échangée avec le fluide de refroidissement (9) via un circuit de refroidissement secondaire (10) au moyen d'un médium de refroidissement (12) à travers le refroidisseur (11), dans laquelle une deuxième machine d'écoulement (18) est de préférence prévue sur l'échangeur de chaleur intermédiaire (30).

Fig.1

EP 2 780 649 B1

Fig.2

Fig.3

Energie Effizienzklasse R [1]

sinnvolle Sollwertschiebung [K]

R407C; t0=0°C
pc=50°C; COP=8.6
pc=50°C; COP=5.4
pc=50°C; COP=3.8
pc=50°C; COP=2.8

R134a; t0=-10°C
pc=50°C; COP=5.4
pc=50°C; COP=3.8
pc=50°C; COP=2.9
pc=50°C; COP=2.2

R404A; t0=-30°C
pc=50°C; COP=2.6
pc=50°C; COP=1.9
pc=50°C; COP=1.5
pc=50°C; COP=1.1

Fig.4

EP 2 780 649 B1

Fig.5

Fig.6

Fig.7

Fig.8

Fig.9

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KYLE A. MANSKE.** *Performance Optimization of Industrial Refrigeration Systems Master of Science,* 01. Januar 1999